# EUROPEAN PATENT APPLICATION

(11) **EP 0 887 224 A2**
(43) Date of publication of application: **30.12.1998**
(21) Application number: 98304569.1
(22) Date of filing: 09.06.1998
(51) Int. Cl.: B60P 1/02

(54) **A support**

(30) Priority: 25.06.1997 GB 9713432
(71) Applicant: Hydraroll Limited, Gaerwen, Anglesey, LL60 6BH (GB)
(72) Inventor: Baguley, Nicolas John, Llanfaes, Anglesey LL58 8LF (GB)
(74) Representative: Johnson, Terence Leslie

(57) **Abstract**

The invention relates to a support 1 for a load 2, the support comprising in the embodiment a floor of a vehicle and also comprising elements 3, 4 which normally define a substantially flat surface 5 for the load 2, some of the elements 3 being shiftable relative to the plane of the surface 5 to provide a path 6 for a device 7 adapted to move a load over the support 1.

## Description

The invention relates to a support, particularly to a support for a load, such support usually being part of a vehicle, usually a floor thereof, and also being part of apparatus for handling a load. Such supports usually have a flat surface in which channels are let.

Devices known as skates often run in channels, the load resting on the skate for movement over the generally flat surface of the support. These channels present a problem in that they arc usually open, so fork and pallet trucks and personnel can fall into the channels during normal loading using such fork or pallet trucks at the start of a journey, where the support is in a load-carrying vehicle, the load being unloaded at the end of the journey using such skate devices. It has been proposed to provide plates which can be raised and lowered in the channels to close and open them as desired, but this arrangement has the disadvantage that fingers or toes of personnel can be trapped if they are in the vehicle during a loading or unloading operation.

It is accordingly an object of the invention to seek to mitigate these disadvantages.

According to a first aspect of the invention there is provided a support for a load, comprising elements which normally define a substantially flat surface for a load, some of the elements being shiftable relative to the plane of the surface to provide a path for a device adapted to move a load over the surface.

Thus using the invention it is possible to provide a support which does not have open areas into which loading equipment or personnel can fall during loading or unloading.

There may be substantially parallel raisable elements for providing the path. This is a relatively simple construction, particularly when the said element may be arranged as a plurality of pairs of elements extending over the surface.

Each element of a pair of elements may be raisable by a similar height whereby to provide the path for a said device.

Each element of a pair of elements may alternatively be raisable by differing heights whereby to provide the path for a said device.

The said elements may also be arranged to act independently of one another to provide a respective adjacent path for a said device.

This last path may comprise a profiled guide member for a said device adjacent each individual element.

Each element may further comprise an inflatable member for shifting the element relative to the plane of the surface.

The inflatable member may comprise a pneumatic member mounted between a seat and the shiftable element.

The shiftable element may comprise a substantially channel-shaped member between the limbs of which the pneumatic member is received. This provides a housing arrangement for the pneumatic member.

There may be means to limit raising of the element. This can avoid canting of the load and/or over inflation of the pneumatic member.

The means may comprise lips on the limbs which are adapted to abut abutment means of the seat. Thus a relatively simple cooperable and releasably engageable limit means may be provided.

The abutment means may comprise projections of the seat or of the floor. This provides a relatively simple construction.

According to a second aspect of the invention there is provided apparatus for handling a load comprising a support as hereinbefore defined, and a device adapted to move along the said path and move a load over the surface.

The said device may comprise a skate device which may comprise a body, and a part which is adapted to receive the load.

The part may be reciprocable substantially vertically with respect to the body.

According to a third aspect of the invention there is provided a vehicle comprising a support as hereinbefore defined and/or apparatus as hereinbefore defined.

The elements may extend longitudinally of the vehicle, which vehicle may comprise a trailer adapted for towing by a tractor unit.

According to a fourth aspect of the invention there is provided a loading dock in combination with a support, apparatus or vehicle as hereinbefore defined.

Supports embodying the invention and hereinafter described, by way of example, with reference to the accompanying drawings.
Figs. 1 to 4 show respectively four separate stages in the unloading of a load from a first embodiment of support according to the invention;
Figs. 5 and 6 show respectively two separate stages, similar to Figs. 1 and 2, in the unloading of a load from a second embodiment of support according to the invention;
Figs. 7 and 8 show respectively separate stages, similar to Figs. 1 and 2 in the unloading of a load from a third embodiment of support according to the invention; and
Fig. 9 shows schematically part of a fourth embodiment of support according to the invention.

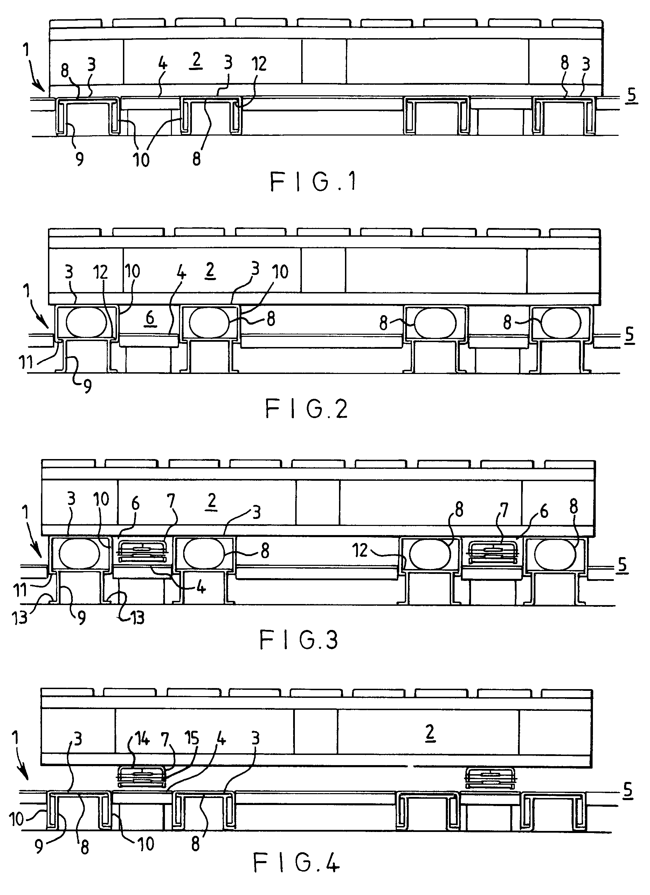

Referring to the drawings, in which like parts are identified by like numerals and referring firstly to Figs. 1 to 4, there is shown a support 1 for a load 2, the support comprising in the embodiment a floor of a vehicle and also comprising elements 3, 4 which normally define a substantially flat surface 5 for the load 2, some of the elements 3 being shiftable relative to the plane of the surface 5 to provide a path 6 for a device 7 adapted to move a load over the support 1.

A plurality of paths 6 are provided (only shown in Figs. 1 to 4), each path 6 being provided by two shiftable elements or sections 3 of the surface or floor 5 per path or channel 6.

The shiftable 3 and non-shiftable 4 elements extend longitudinally of the vehicle. Each of the shiftable elements 3 is shifted by being raised relative to the surface 5, in the embodiment by an inflatable device such as a pneumatic bag or cell 8 which is operable by a pneumatic system of the vehicle although a separate or alternative system can be used. The pneumatic bag 8 is supported on a seat 9 and between the limbs 10 of an inverted, in use, channel shaped member the web of which rests on the pneumatic bag 8 and which forms the element 3 forming the flat surface.

Means to limit the rise of the element 3 comprise an inturned flange 11 on each limb 10 which abut abutment means in the form of lateral projections 12 of the seat 9 as shown in Figs. 2 and 3. In Figs. 1 and 4, the flanges 11 rest on out-turned feet 13 of the seat 9 it being understood that the length of the limb 10 and the thickness of the flanges 11 and feet 13 are designed to provide the desired level of the web 3 to provide a flat floor.

In use, it will be understood that in Fig. 1, the bags 8 are deflated so that a flat surface 5 is provided, with no open channels. The load 2 is then manoeuvred over the floor using conventional pallet or fork lift trucks, which cannot become trapped in non-existent channels and nor can personnel fall into them. After loading, the load 2 is therefore resting on the flat floor 5 of the support 1, as shown in Fig. 1.

For unloading, the bags 8 are inflated, thereby lifting the elements 3 above the element 4. This lifts the load 2 from the surface or floor and creates the paths 6 in the form of channels into which the skate devices or skates 7 can move. This is not dangerous to personnel as the skates are introduced from the end of the vehicle, and no fork or pallet trucks are required. In any event, the channels 6 are effectively closed by the load 2 above (Fig. 2).

The skate device comprising a body 14 and running on rollers or wheels 15 and not being raisable of themselves in the embodiment, are shown in position under the load and in the channels, (Fig.3). (It will be understood that the skate could have rollers which are raisable of themselves. In another construction, the skate has a body comprising two parts, one of which houses the rollers and which is below the other part, which other part is raisable relative to the one part).

The elements 3 are then lowered by deflating the bags 8, thereby lowering the load 2 onto the skates 7, which are above the surface 5 (Fig. 4). The skates 7 are then withdrawn, say onto a loading/unloading dock, carrying the load 2 with them, the surface 5 being flat and without channels.

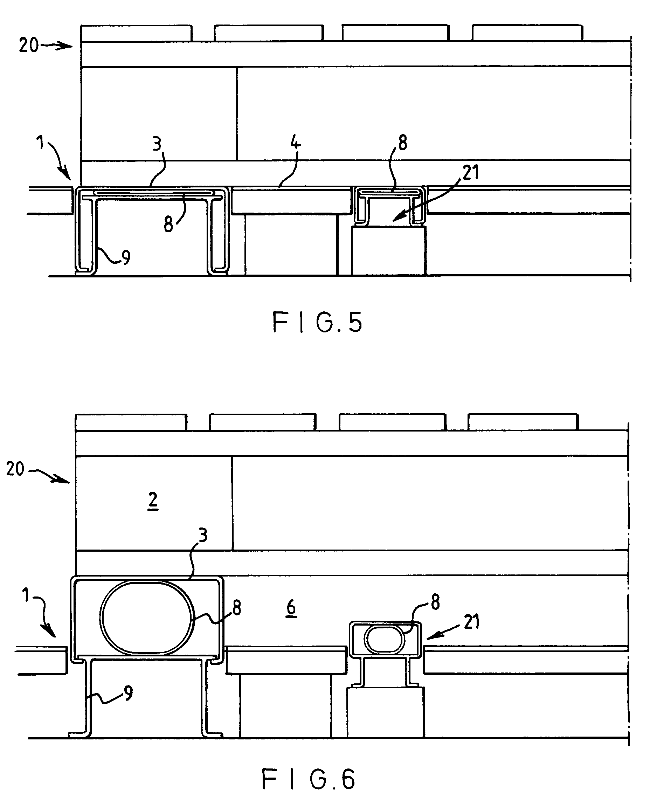

The second embodiment 20 shown in Figs. 5 and 6 is similar to the first embodiment, except that to reduce weight and cost, one 21 of each pair of shiftable elements is of smaller cross-section and height, and hence is of lower lift than the other one 3. This creates a lower right hand (as viewed) side wall of the channel 6, but, as with the first embodiment, the two elements 3, 21 providing each channel 6 with a guide for the skate device (not shown) (Fig. 6). It will be understood that in Figs. 5 and 6, the right hand half of the floor is omitted for clarity, there being similar shiftable elements 3, 21 to the right (not shown) so that the load 2 is supported level on the larger 3 of the two elements 3, 21 similar to the element shown.

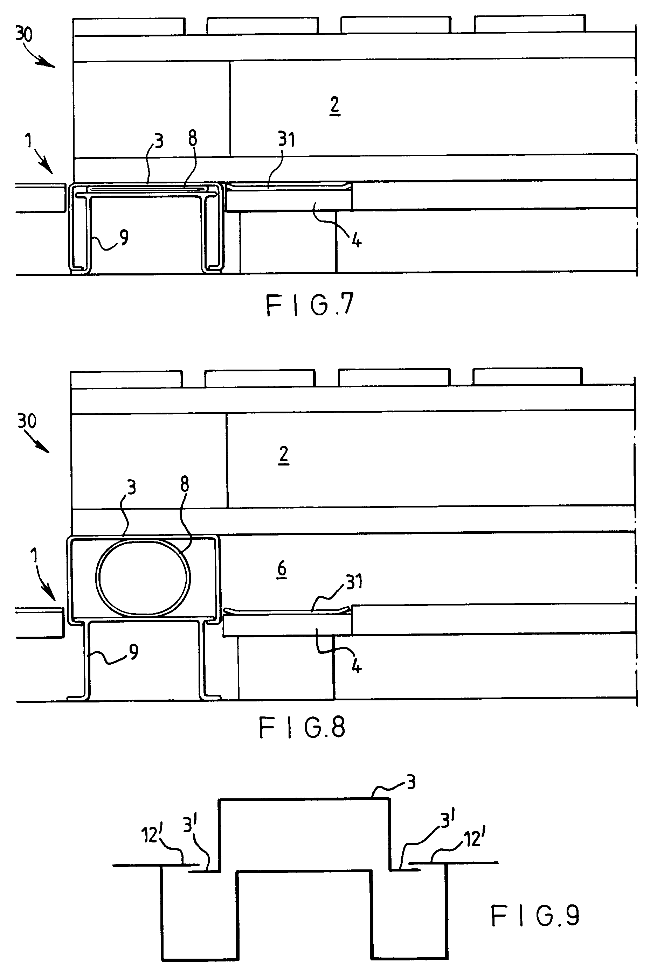

Figs. 7 and 8 show a third embodiment 30 in which there is a series of individual shiftable elements 3 which nevertheless in the shifted or raised position define the path 6 for the skate (not shown) below the load 2 as before, over a non-shiftable element 4 just like in Figs. 1 to 4 or 5 and 6, the non-shiftable element 4 having a profiled or dish-shaped upper surface member 31 which assists in guidance of the skate (not shown) down the path 6.

In an alternative, fourth, embodiment of support as shown in Fig. 9, the shiftable element 3 is of "top hat" form in end elevation, having outwardly turned flanges 3' which in the raised position abut with the underside as viewed of abutment means in the form of lateral projections 12' of the floor whereby as in the earlier embodiments to limit the rise of the element 3. Otherwise, the construction and operation of the embodiment of Fig. 9 is as for the earlier embodiments.

It will be understood that a support and skate device combination apparatus, and vehicle as described hereinbefore can also be used to load a vehicle with a load, in this case the skate devices themselves being lifting skates, that is with a body and a part which is raisable and lowerable relative thereto. In this embodiment, a typical sequence of operations is:-
1. Lift floor elements or sections in empty vehicle to create paths or channels for skate devices;
2. Skates with raisable part (in raised position) enter vehicle carrying the load;
3. Skates are lowered, depositing load on raised floor elements or sections;
4. Skates withdraw from lorry, usually back onto a loading dock;
5. Floor elements lower, placing load on flat vehicle floor.

It will be understood that in all embodiments, there are no riser plates to be raised and lowered to close and open the skate paths or channels, so fingers or toes of personnel cannot be trapped between the plate and a top flange defining a channel as there is no such plate or flange.

Moreover, if the air fails, the support and hence floor of the vehicle is always flat, and no channels appear in that floor, which remains completely flat during loading so providing flexibility as a pallet or fork lift truck can be manoeuvred at will over the support or floor.

## Claims

1. A support for a load, characterised by elements (3, 4) which normally define a substantially flat surface (5) for a load, and by some of the elements (3) being shiftable relative to the plane of the surface (5) to provide a path (6) for a device (7) adapted to move a load over the surface.

2. A support according to Claim 1, characterised by substantially parallel raisable elements (3) for providing the path (6).

3. A support according to Claim 2, characterised by the elements (3) being arranged as a plurality of pairs of elements extending over the surface (5).

4. A support according to Claim 3, charaeterised by each element (3) of a pair of elements being raisable by a similar height whereby to provide the path for a said device.

5. A support according to Claim 3, characterised by each element (3) of a pair of elements being raisable by differing heights whereby to provide the path for a said device.

6. A support according to Claim 2, characterised by the elements (3) acting independently of one another to provide a respective adjacent path for a said device.

7. A support according to Claim 6, characterised by the path (6) comprising a profiled guide member (3) adjacent each individual element.

8. A support according to any preceding claim, characterised by each element (3) comprising an inflatable member (8) for shifting the element relative to the plane of the surface.

9. A support according to Claim 8, characterised by the inflatable member (8) comprising a pneumatic member mounted between a seat (9) and the shiftable element (3).

10. A support according to Claim 9, characterised by the shiftable element (3) comprising a substantially channel-shaped member between the limbs (10) of which the pneumatic member (8) is received.

11. A support according to Claim 10, charaeterised by there being means (11, 12, 12') to limit raising of the element (3).

12. A support according to Claim 11, characterised by the means comprising lips (11) on the limbs (10) which are adapted to abut abutment means (12, 12') of the seat.

13. A support according to Claim 12, characterised by the abutment means comprising projections (12, 12') of the seat.

14. Apparatus for handling a load, characterised by a support (1) according to any preceding claim, and by a device (7) adapted to move along the said path (6) and move a load over the surface (5).

15. Apparatus according to Claim 14, characterised by the device (7) comprising a skate device comprising a body and a part which is adapted to receive the load.

16. Apparatus according to claim 15, characterised by the part being reciprocable substantially vertically with respect to the body.

17. A vehicle, characterised by a support according to any of Claims 1 to 13 or apparatus according to any of Claims 14 to 16.

18. A vehicle according to Claim 17, characterised by the elements extending longitudinally of the vehicle.

19. A vehicle according to Claim 18, characterised by a trailer adapted for towing by a tractor unit.

20. A loading dock, in combination with a support apparatus or vehicle according to any preceding claim.
